(19) Europäisches Patentamt
European Patent Office
Office européen des brevets

(11) **EP 1 987 574 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **07711546.7**

(22) Anmeldetag: **15.02.2007**

(51) Int Cl.:
*H02H 7/085* (2006.01)     *H02H 3/00* (2006.01)

(86) Internationale Anmeldenummer:
**PCT/EP2007/001318**

(87) Internationale Veröffentlichungsnummer:
**WO 2007/093418 (23.08.2007 Gazette 2007/34)**

(54) **EINKLEMMSCHUTZ SOWIE VERFAHREN ZUR STEUERUNG EINER MOTORISCH ANGETRIEBENEN VERSTELLVORRICHTUNG**

JAMMING PROTECTION AND METHOD FOR CONTROLLING A MOTOR-DRIVEN ADJUSTING APPARATUS

DISPOSITIF DE PROTECTION ANTI-PINCEMENT ET PROCÉDÉ DE COMMANDE D'UN DISPOSITIF DE DÉPLACEMENT ENTRAÎNÉ PAR MOTEUR

(84) Benannte Vertragsstaaten:
**DE FR**

(30) Priorität: **17.02.2006 DE 202006002527 U**

(43) Veröffentlichungstag der Anmeldung:
**05.11.2008 Patentblatt 2008/45**

(73) Patentinhaber: **Brose Fahrzeugteile GmbH & Co. Kommanditgesellschaft, Coburg**
**Max-Brose-Straße 1**
**96450 Coburg (DE)**

(72) Erfinder:
• **RÖSCH, Thomas**
**06268 Querfurt (DE)**
• **SCHÜSSLER, Markus**
**97799 Zeitlofs (DE)**

(74) Vertreter: **FDST Patentanwälte**
**Nordostpark 16**
**90411 Nürnberg (DE)**

(56) Entgegenhaltungen:
**EP-A1- 0 865 137     WO-A-02/15359**
**DE-A1- 19 941 475**

**Beschreibung**

Die Erfindung betrifft einen Einklemmschutz sowie ein Verfahren zur Steuerung einer motorisch angetriebenen Verstellvorrichtung, insbesondere einer Sitzverstellung eines Kraftfahrzeug, wobei zur Überwachung auf einen Einklemmfall aus erfassten Kenngrößen des motorischen Antriebs eine vom Antrieb ausgeübte Gesamtbelastung ermittelt wird.

Bei motorisch angetriebenen Verstellvorrichtungen im Kraftfahrzeug, beispielsweise bei Fensterhebern, Schiebedächern, Schiebetüren, Heckklappen etc. ist aus Sicherheitsgründen ein Einklemmschutz erforderlich, um im Bedarfsfall, wenn also ein Gegenstand oder ein Körperteil eingeklemmt ist, den motorischen Antrieb zu stoppen und gegebenenfalls zu reversieren. Ein derartiger Einklemmschutz wird insbesondere auch bei motorischen Sitzverstellungen angestrebt. Zur Ermittlung, ob ein Einklemmfall vorliegt, werden üblicherweise Kenngrößen des motorischen Antriebs ausgewertet. Derartige Kenngrößen sind beispielsweise die Motorspannung, der Motorstrom oder die Drehzahl. Aus diesen wird üblicherweise das Motormoment und aus diesem wiederum eine Überschusskraft ermittelt. Die Überschusskraft ergibt sich aus der Differenz zwischen der vom Motor ausgeübten Gesamtkraft und einer Gesamtverstellkraft, die insbesondere zur Überwindung der Reibung sowie zur Beschleunigung der Verstellvorrichtung erforderlich ist. Die Bestimmung der Verstellkraft ist jedoch schwierig, da beispielsweise die Reibung im Verlauf des Verstellvorgangs durch Orte mit höherer Schwergängigkeit variieren kann. Zudem können Alterungseffekte oder auch Temperatureinflüsse auf die Reibung einen erheblichen Einfluss nehmen. Auch werden teilweise variierende Beschleunigungskräfte bei der Ermittlung der Überschusskraft berücksichtigt. So werden beispielsweise gemäß der EP 1 310 030 B1 zur Bestimmung der resultierenden Überschusskraft eine Vielzahl von Einzelkräften in einem Summationspunkt aufsummiert und durch Vergleich mit der aktuell vom Motor ausgeübten Kraft wird eine Überschusskraft oder eine Einklemmkraft bestimmt.

Aus der EP1 299 782 B1 ist ein Einklemmschutz zu entnehmen, bei dem der aktuelle Verlauf der vom Motor ausgeübten Kraft über den Verstellweg mit dem Verlauf der Kraft eines vorhergegangenen Betätigungsvorgangs verglichen wird. Falls zwischen den beiden Betätigungsvorgängen ein längerer Zeitraum besteht, können sich die Umgebungsbedingungen, wie beispielsweise Temperatur, jedoch wesentlich verändert haben. Der Rückgriff auf den Kraftverlauf eines vorhergehenden Betätigungsvorgangs kann sich daher als problematisch erweisen, um den zuvor gemessenen Kraftverlauf als aktuellen Verlauf der Reibungskraft heranziehen zu können.

Aus der EP 0 714 052 B1 ist ein Einklemmschutz für ein Seitenfenster oder ein Schiebedach zu entnehmen, bei dem der Verstellvorgang in gleich große Zeitfenster unterteilt wird, die im Bereich von 100 mSec liegen. Diese Zeitfensterbreite soll hierbei anhand des langsamsten vorkommenden zu detektierenden Einklemmfalls gewählt sein. Zur Ermittlung der Überschusskraft werden die Messwerte des aktuellen Zeitpunkts mit denen eines Referenzzeitpunkts verglichen, der vom aktuellen Messzeitpunkt um eine Fensterbreite beabstandet ist, und zu dem kein Einklemmfall vorliegt.

Aus der EP 0865 137 ist ein weiterer Einklemmschutz für Seitenfenster oder Schiebedächer zu entnehmen, bei dem bereits bei einer Anlaufphase unmittelbar nach Aktivierung eines Schließvorgangs Motorkenngrößen auf ein Einklemmen untersucht werden.

In der der DE 199041 475 A1 ist ein Einklemmschutz für Seitenfenster oder Schiebedächer beschrieben, bei dem durch Vorgabe eines zeitlichen Grenzwertverlaufs für eine Kenngröße zwischen weichen und harten eingeklemmten Gegenständen unterschieden wird.

Die sichere Erkennung eines Einklemmschutzes bei einer Sitzverstellung gestaltet sich im Vergleich zu Fensterhebern oder Schiebedächern, bei denen die Scheibe gegen einen festen Anschlag verfährt, komplexer.

Der Erfindung liegt die Aufgabe zugrunde, einen einfach ausgebildeten Einklemmschutz und ein einfach ausgebildetes Verfahren zur sicheren Erfassung eines Einklemmfalls insbesondere auch bei einer Sitzverstellung zu ermöglichen.

Die Aufgabe wird gemäß der Erfindung mit den Merkmalen des Patentanspruchs 1 gelöst. Danach ist vorgesehen, dass zu Beginn eines jeden Verstellvorgangs während einer Startphase die vom motorischen Antrieb ausgeübte Gesamtbelastung ermittelt und als die Grundbelastung der Verstellvorrichtung festgehalten wird. Die Grundbelastung setzt sich hierbei insbesondere aus der zu überwindenden Reibungsbelastung und der Beschleunigungsarbeit zusammen. Erst im Anschluss an die Startphase schließt sich eine Überwachungsphase an, während der aus einem Vergleich, insbesondere durch eine Differenzbildung zwischen der ermittelten Grundbelastung und der aktuellen Gesamtbelastung ermittelt wird, ob ein Einklemmfall vorliegt. Bei Identifizieren eines Einklemmfalls wird eine Gegenmaßnahme eingeleitet, beispielsweise ein Stoppen oder ein Reversieren des motorischen Antriebs.

Als Gesamtbelastung wird hierbei insbesondere das Motordrehmoment aus erfassten Kenn- oder Stellgrößen des Motors ermittelt, wie beispielsweise der Motorstrom, die Motordrehzahl etc. Alternativ oder ergänzend zu dem Motordrehmoment besteht auch die Möglichkeit, direkt aus den derartigen Kenngrößen ohne Ermittlung des tatsächlichen Drehmoments eine die Gesamtbelastung repräsentierende Kenngröße zu ermitteln bzw. vorzugsweise die erfasste Kenngröße, insbesondere die beispielsweise mittels eines Hall-Sensors erfasste Drehzahl, direkt als Kriterium für die Gesamtbelastung heranzuziehen. Die erfasste Kenngröße ist daher zugleich ein direktes Abbild der Gesamtbelastung.

Bei der Verwendung der Drehzahl als Kenngröße lässt sich nämlich aus einem Abfall der Drehzahl unmittelbar auf eine Erhöhung der Gesamtbelastung rückschließen. Bei der Verwendung eines drehzahlgeregelten Gleichstrommotors wird anstelle der Drehzahl ein Regel- oder Stellsignal herangezogen.

Ein besonderes Merkmal bei diesem Verfahren ist die Ermittlung der Grundbelastung zu Beginn des Verstellvorgangs. Hierdurch wird die aktuelle Verstellkraft ermittelt und als Vergleichswert für die Überwachungsphase herangezogen. Während der Startphase findet hierbei keine Überwachung auf das Vorliegen eines Einklemmfalls statt. Es wird hierbei von der Annahme ausgegangen, dass während der Startphase kein Einklemmfall vorliegt. Dies beruht auf der Überlegung, dass bei einer Sitzverstellung üblicherweise unterstellt werden kann, dass eine sich auf dem Sitz oder hinter dem Sitz befindliche Person zunächst noch eine ausreichende Bewegungsfreiheit hat oder dass die Elastizität des Sitzpolsters ausreichend hoch ist, so dass zu Beginn des Verstellvorgangs die Person nicht eingeklemmt ist. Es wird also ein freier Verstellweg während der Startphase angenommen, während der aus der vom Antrieb ausgeübten Gesamtbelastung die Grundbelastung ermittelt werden kann.

Gemäß einer bevorzugten Ausgestaltung ist hierbei die Startphase derart bemessen, dass diese einem translatorischen Verstellweg von bis zu 50 mm, insbesondere von bis zu 15 mm bzw. bei einer Neigungsverstellung von etwa 1° entspricht. Unter translatorischem Verstellweg wird hier insbesondere eine Verstellung der Sitzfläche des Sitzes in Längsrichtung verstanden. Zur Ausübung der Verstellbewegung können translatorische als auch rotatorische Bewegungen der Verstellmechanik verwendet werden. Innerhalb dieses angegebenen Bereiches für den Verstellweg kann nämlich ein Einklemmfall ausgeschlossen werden. Gleichzeitig ist dieser Bereich ausreichend groß, um die Grundbelastung hinreichend genau zu bestimmen. Aufgrund der mechanischen Zwangsführung besteht eine direkte Korrelation zwischen der Anzahl der Motorumdrehungen und dem translatorischen Verstellweg bzw. dem Verstellweg bei der Neigungsverstellung. Über die Drehzahl des in der Regel verwendeten Gleichstrommotors lassen sich dann in Abhängigkeit des jeweiligen Systems konkrete Zeitfenster für die Startphase ermitteln.

Bei der Ermittlung der Gesamtbelastung des Motors durch Auswertung von Motorkenngrößen wird üblicherweise auf ein mathematisches, nach Art eines Regelkreises ausgebildetes Modell zurückgegriffen. Eine die Regelung des Motors beeinflussende Stellgröße, beispielsweise die Motorspannung, wird hierbei als Eingangsgröße für das mathematische Modell herangezogen und aus dieser Eingangsgröße wird dann die aktuelle Gesamtbelastung ermittelt. Bei einer signifikanten Abweichung der Gesamtbelastung von der Grundbelastung bzw. bei einer signifikanten Abweichung der erfassten Kenngröße als zu der Belastung korrelierte Größe, wird von einem ersten Modell auf ein zweites, vom ersten verschiedenes Modell umgeschalten wird, um mit diesem zweiten Modell beurteilen zu können, ob tatsächlich ein Einklemmfall vorliegt. Insbesondere wird bei einer vorgegebenen Abweichung der Drehzahl von einer mittleren Drehzahl, beispielsweise bei Abfall der Drehzahl auf etwa dem 0,7-fachen der mittleren Drehzahl, auf das zweite Modell umgeschaltet. Alternativ kann als Kenngröße für das Umschalten bei einer signifikanten Abweichung beispielsweise auch der Motorstrom und dessen Abweichung von einem mittleren Motorstrom herangezogen werden. Diese Ausgestaltung beruht zunächst auf der Überlegung, dass eine signifikante oder charakteristische Abweichung ein Indiz für einen Einklemmfall sein kann, dass dies jedoch für die sichere Beurteilung eines Einklemmfalls noch nicht ausreicht. Insbesondere bei dem Einklemmschutz für eine Sitzverstellung sind unterschiedliche Szenarien möglich, die zu einer Zunahme der Gesamtbelastung führen können, ohne dass ein Einklemmfall vorliegt. Weiterhin wird hierbei von der Überlegung ausgegangen, dass für die Entscheidung, ob tatsächlich ein Einklemmfall vorliegt, insbesondere ein sensibleres mathematisches Modell notwendig ist. Umgekehrt bedeutet dies auch, dass im Normalfall für das erste Modell ein einfacher Algorithmus herangezogen wird, der nur geringe Ressourcen beansprucht.

Das Umschalten von einem ersten auf ein zweites mathematisches Modell ist insbesondere auch unabhängig von der Ermittlung der Grundbelastung. Das Grundkonzept des Umschaltens ist allgemein auf Auswerteverfahren anzuwenden, wobei erst bei Erfassen eines charakteristischen Ereignisses auf das zweite mathematische Modell umgeschalten wird.

Hierbei ist vorzugsweise vorgesehen, dass das erste Modell die bei der Verstellvorrichtung auftretende Reibung berücksichtigt und bei dem das zweite Modell zusätzlich ein den Einklemmfall berücksichtigendes Federmodell umfasst. Die Verwendung des Federmodells beruht auf der Überlegung, dass bei einem möglichen Einklemmfall die eingeklemmte Person in das Sitzpolster gepresst wird. Dies kann das Sitzpolster eines Rücksitzes sein, gegen den ein Vordersitz verfahren wird. Es kann jedoch auch das Sitzpolster des Vordersitzes sein, wenn dieser nach vorne gegen das Lenkrad oder die Armaturentafel verfahren wird. Das weiche Sitzpolster übt eine Gegenkraft aus, wobei der Wert der Gegenkraft sich mit einer Federkraft vergleichen lässt. Durch die Verwendung eines derartigen Federmodells lassen sich daher insbesondere durch die Ermittlung von charakteristischen Federkonstanten Entscheidungen ableiten, ob ein Einklemmfall vorliegt und insbesondere auch welcher Art dieser ist.

Um einen reibungslosen Übergang zwischen den beiden mathematischen Modellen zu ermöglichen, werden die mit dem ersten Modell erhaltenen Größen bei Umschalten auf das zweite Modell zumindest teilweise als Eingangsgrößen für dieses herangezogen.

Bevorzugt wird als signifikante und charakteristische Abweichung zwischen der Gesamtbelastung und der Grundbelastung die Überschreitung eines Grenzwerts für die Differenz zwischen diesen beiden Belastungswerten he-

EP 1 987 574 B1

rangezogen. Alternativ oder begleitend wird vorzugsweise weiterhin die Überschreitung eines Grenzwerts für die beispielsweise zeitliche oder auch örtliche Ableitung dieser Differenz herangezogen. Hier wird wiederum bevorzugt die Drehzahl als unmittelbare Kenngröße für die Belastung herangezogen. Die Grundbelastung ist durch eine insbesondere mittlere Drehzahl abgebildet. Es ist also ein Drehzahl-Grenzwert vorgesehen, bei dessen Unterschreiten eine signifikante Abweichung angenommen wird.

Zur Ermittlung der Grundbelastung wird weiterhin bevorzugt der Mittelwert der Gesamtbelastung bzw. der die Gesamtbelastung repräsentierenden erfassten Kenngröße herangezogen, um einen möglichst belastbaren Wert für die Grundbelastung zu erhalten. Um diesen Wert für die Grundbelastung nicht durch Anfahreffekte zu belasten, wird die während einer Anfahrphase auftretende Gesamtbelastung des motorischen Antriebs bevorzugt nicht berücksichtigt. Diese Anfahrphase definiert beispielsweise den Bereich, bis der Motor auf seine Solldrehzahl eingeregelt ist. Üblicherweise ist dies bereits nach einigen Motorumdrehungen der Fall.

Da über den Verstellweg hinweg unterschiedliche Verstellkräfte beispielsweise durch Schwergängigkeiten auftreten können, ist gemäß einer zweckdienlichen Weiterbildung vorgesehen, dass die Grundbelastung auch während der Überwachungsphase ermittelt und als aktuelle Grundbelastung festgehalten wird, die für nachfolgende Messungen der Kenngröße während der Überwachungsphase für den Vergleich mit der Gesamtbelastung herangezogen wird. Die Grundbelastung wird also auch während der Überwachungsphase insbesondere kontinuierlich, beginnend mit dem während der Startphase ermittelten Wert für die Grundbelastung, ermittelt. Die Grundbelastung wird daher auch während der Überwachungsphase nachgeführt. Hierbei können diskrete Zeitfenster vorgesehen sein, während der die Grundbelastung ermittelt wird. Alternativ zu der Nachführung der Grundbelastung besteht prinzipiell auch die Möglichkeit, den während der Startphase ermittelten Wert für die Grundbelastung für den gesamten Stellvorgang als konstanten Vergleichswert heranzuziehen.

Von besonderem Vorteil ist, wenn die aktuelle Grundbelastung aus mehreren Messwerten der erfassten Kenngröße, insbesondere durch eine Mittelwertbildung abgeleitet wird. Hierdurch werden Änderungen im Verlauf der Gesamtbelastung für die Ermittlung der Grundbelastung geglättet.

Sobald eine signifikante Abweichung der auf diese Art ermittelten Grundbelastung erfasst wird, wird vorzugsweise die zuletzt ermittelte aktuelle Grundbelastung festgehalten und der weitere Verlauf der Gesamtbelastung, insbesondere die Differenz zwischen der Gesamtbelastung und der festgehaltenen Grundbelastung bzw. die Differenz wischen den die Gesamtbelastung und die Grundbelastung repräsentierenden Werten der erfassten Kenngröße, wird dann auf Vorliegen eines Einklemmfalls überprüft. Die Überschreitung der signifikanten Abweichung alleine ist noch kein ausreichendes Kriterium für das Vorliegen eines Einklemmfalles, da auch weitere Situationen, wie z.B. eine lokale Schwärgängigkeit oder ein Anfahren gegen einen mechanischen Anschlag vorliegen kann. Nach Erkennen der signifikanten Abweichung ist daher eine weitere Überprüfung und Auswertung des Verlaufs der Gesamtbelastung vorgesehen.

Bevorzugt wird aus den Kenngrößen des motorischen Antriebs als Gesamtbelastung das Gesamtdrehmoment und für die Startphase ein Grunddrehmoment ermittelt, wobei insbesondere durch Differenzbildung ein resultierendes Moment, insbesondere Einklemmmoment, oder eine korrelierte Größe abgeleitet wird. Weiterhin wird zweckdienlicherweise das Einklemmmoment mit einem die Mechanik der Verstellvorrichtung berücksichtigenden Gewichtungsparameter zur Bestimmung der resultierenden Einklemmkraft gewichtet. Der Gewichtungsparameter berücksichtigt hierbei beispielsweise die Hebellänge, die Hebelübersetzung oder die Position der Verstellmechanik. In den Gewichtungsparameter fließen zudem auch Informationen über die Gefahrenbereiche, also beispielsweise die Abstände zwischen den Sitzen ein, die insbesondere auch abhängig von der Körpergröße sind. Die Werte des Gewichtungsparameters werden hierbei vorzugsweise mit Hilfe von Messungen an einem physikalischen Modell ermittelt und abgespeichert. Alternativ können die Werte auch rechnerisch ermittelt werden.

Zweckdienlicherweise wird für die Ermittlung, ob ein Einklemmfall vorliegt, ein Federmodell zugrunde gelegt und insbesondere zumindest eine Federkonstante ermittelt, anhand der entschieden wird, ob ein Einklemmfall vorliegt. Für die Entscheidung wird hierbei bevorzugt die absolute Größe und/oder der Verlauf der Federkonstanten, also deren Ableitung, herangezogen. Anhand des Verlaufs der Federkonstanten werden verschiedene Betriebssituationen, nämlich insbesondere eine Lastbewegung, ein Anfahren gegen einen Anschlag, eine panische Gegenreaktion und das Einklemmen unterschieden. Zweckdienlicherweise werden zumindest zwei ermittelte Werte für die Federkonstante herangezogen, um eine sichere Zuordnung zu gewährleisten. Hierzu werden vorzugsweise zumindest drei Belastungsschwellwerte definiert, zwischen denen insbesondere durch Interpolation die Federkonstante ermittelt wird.

Die Aufgabe wird weiterhin erfindungsgemäß gelöst durch ein Verfahren mit den Merkmalen des Anspruchs 20. Die im Hinblick auf den Einklemmschutz angegebenen Vorteile und bevorzugten Ausgestaltungen lassen sich sinngemäß auch auf das Verfahren übertragen.

Ausführungsbeispiele der Erfindung werden im Folgenden anhand der Figuren näher erläutert. Es zeigen jeweils in schematischen und vereinfachten Darstellungen:

Fig. 1    eine Darstellung eines physikalischen Gedankenmodells einer Verstellvorrichtung, insbesondere einer Sitzverstellung,

4

Fig. 2      einen Regelkreis zu einem ersten mathematischen Modell zur Beschreibung der einzelnen Abläufe bei der Verstellvorrichtung,

Fig. 3      einen zweiten Regelkreis zu einem zweiten mathematischen Modell zur Beschreibung der einzelnen Abläufe bei der Verstellvorrichtung unter Berücksichtigung eines Einklemmfalls,

Fig. 4      eine schematische Darstellung des Verlauf des Motordrehmoments bzw. der Motorkraft gegenüber dem Weg oder der Zeit,

Fig. 5 und 6      schematische Darstellungen von Kraft- oder Drehmomentverläufen für unterschiedliche bei der Verstellbewegung auftretende Bewegungsklassen sowie

Fig. 7      ein Kraft-Weg-Diagramm, bei dem die einzelnen Bewegungsklassen unterschiedlichen Bereichen zugeordnet sind.

Das anhand der Figuren nachfolgend erläuterte Verfahren zur sicheren Erfassung eines Einklemmschutzes dient insbesondere für die Anwendung bei einer motorisch angetriebenen Sitzverstellung im Kraftfahrzeugbereich. Eine derartige Einrichtung weist eine Verstellmechanik auf, die einen Sitzträger umfasst, der üblicherweise in zur Horizontalen leicht geneigten Führungsschienen längsverstellbar ist. Am Sitzträger ist zugleich eine in ihrer Neigung verstellbare Rückenlehne befestigt. Der Drehpunkt der Rückenlehne ist hierbei etwas beabstandet von den Führungsschienen angeordnet. Die Verstellvorrichtung umfasst ferner sowohl für die translatorische Verstellung in Längsrichtung des Sitzträgers als auch für die Neigungsverstellung der Rückenlehne jeweils einen Antriebsmotor. Dieser ist üblicherweise ein Gleichstrommotor oder auch ein drehzahlgeregelter Gleichstrommotor.

Bei der automatischen Sitzverstellung besteht die Gefahr, dass eine Person im zu verstellenden Sitz oder auch zwischen dem zu verstellenden Sitz und einem Rücksitz eingeklemmt wird. Ein derartiger Einklemmfall führt zu einem höheren Motordrehmoment und damit korreliert zu einer höheren, vom Motor aufgewandten Kraft. Dieses vom Motor erzeugte Gesamtdrehmoment wird vorliegend auch allgemein als Gesamtbelastung bezeichnet. Die Identifizierung eines Einklemmfalls ist insbesondere bei einer derartigen Sitzverstellung problematisch, da aufgrund der weichen Sitzpolster im Einklemmfall die zusätzlich vom Motor aufzubringende Kraft nicht zwingend einen abrupten Anstieg zeigt.

Das nachfolgend beschriebene Verfahren ist insbesondere für eine Sitzverstellung geeignet, kann prinzipiell jedoch auch auf andere Verstelleinrichtungen, wie beispielsweise Fensterheber, Schiebetüren, Heckklappen, Schiebedächer etc. angewandt werden.

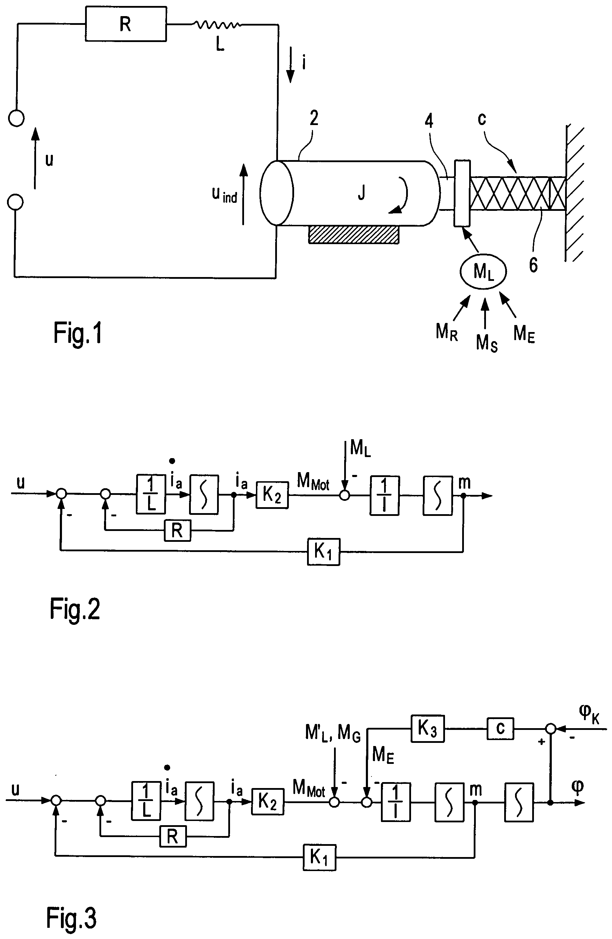

Die rechnerische und mathematische Behandlung einer derartigen Verstellvorrichtung mit Hilfe einer Steuereinrichtung wird nachfolgend anhand der Fig. 1 bis 3 näher erläutert. Fig. 1 zeigt hierbei ein physikalisches Gedankenmodell einer derartigen Verstellvorrichtung. Gemäß diesem physikalischen Modell liegt im Betrieb am Motor 2 die Motorspannung u an und es fließt ein Motorstrom i. Der Stromkreis weist einen ohmschen Widerstand R sowie eine Induktivität L auf. Während des Betriebs wird eine Gegenspannung $u_{ind}$ induziert. Der Motor übt aufgrund des Motorstroms i ein Motormoment $M_{Mot}$ aus und treibt eine Welle 4 mit einer Drehzahl n an. Mit der Welle 4 ist die Verstellmechanik der Verstelleinrichtung gekoppelt, die durch das Trägheitsmoment J repräsentiert ist. Zudem wird von der Verstellmechanik ein Lastmoment $M_L$ ausgeübt, welches dem Motormoment $M_{Mot}$ entgegenwirkt. Das Lastmoment $M_L$ setzt sich aus mehreren Teilmomenten zusammen, beispielsweise einem aufgrund der Reibung der Verstelleinrichtung ausgeübten Reibungsmoment $M_R$, welches zusätzlich von einem Schwergängigkeitsmoment $M_S$ überlagert sein kann. Im Einklemmfall geht in das Lastmoment $M_L$ zusätzlich noch ein Einklemmmoment $M_E$ ein. Um einen Einklemmschutz sicher identifizieren zu können, muss dieses Einklemmmoment $M_E$ ermittelt werden. Problematisch hierbei ist, dass die weiteren Anteile des Lastmoments $M_L$ variabel sind. Insbesondere bei einem Einklemmschutz für eine Sitzverstellung ist die Erkennung eines Einklemmfalles problematisch, da aufgrund der Nachgiebigkeit des Sitzpolsters die Einklemmkraft nur langsam anwächst und damit nur sehr schwer beispielsweise von einer lokalen Schwergängigkeit zu unterscheiden ist.

Für den Einklemmfall wird ein Federmodell angenommen, um die realen Abläufe beim Einklemmen einer Person zwischen dem Sitz und einem weiteren Sitz oder dem Armaturenbrett physikalisch und mathematisch in einem einfachen Modell zu beschreiben. In dem in Fig. 1 gezeigten physikalischen Modell äußert sich dies darin, dass das zum Lastmoment $M_L$ beitragende Einklemmmoment $M_E$ als ein dem Motormoment $M_{Mot}$ entgegenwirkendes Federmoment einer Feder 6 charakterisiert ist. Diese Feder 6 ist wiederum charakterisiert durch eine Federsteifigkeit, die über eine Federkonstante c abgebildet ist.

Unter Zugrundelegung dieses physikalischen Modells ergibt sich nachfolgende Gleichung 1 für die Motorspannung u:

$$\text{Gleichung 1:} \qquad u = R \cdot i + L\, di/dt + u_{ind}$$

Hieraus lässt sich für die Größe di/dt die Gleichung 1' ableiten:

$$\text{Gleichung 1':} \qquad di/dt = 1/L\,(u - R{\cdot}i - K_1 n)$$

wobei hierbei die folgende Relation berücksichtigt wurde, wonach die induzierte Spannung $u_{ind}$ proportional zur Drehzahl n ist und der Proportionalitätsfaktor $K_1$ ist:

$$\text{Gleichung 2:} \qquad u_{ind} = K_1 n$$

Weiterhin gilt, dass das Motormoment $M_{Mot}$ proportional zu dem Motorstrom i ist mit einer Proportionalitätskonstante $K_2$:

$$\text{Gleichung 3:} \qquad M_{Mot} = K_2\, i$$

Für die rechte Seite des physikalischen Modells gemäß Fig. 1 lässt sich folgende Gleichung für die Drehmomente aufstellen, wonach die Differenz zwischen dem Motormoment $M_{Mot}$ und dem Lastmoment $M_L$ proportional zu der Änderung der Drehzahl n ist, wobei der Proportionalitätsfaktor das Trägheitsmoment J ist:

$$\text{Gleichung 4:} \qquad M_{Mot} - M_L = J\, dn/dt$$

Das Trägheitsmoment J setzt sich real aus mehreren Anteilen, insbesondere dem Trägheitsmoment des Motors und dem der mechanischen Teile des Sitzes zusammen. Da für motorische Sitzverstellungen in der Regel sehr große Übersetzungen vorgesehen sind, ist der Anteil am Gesamtträgheitsmoment der mechanischen Teile zu vernachlässigen und für die Berechnung ist die Berücksichtigung des Motor-Trägheitsmoments ausreichend. Für das Einklemmmoment $M_E$ lässt sich aus dem Federmodell folgende Gleichung ableiten, nach der das Einklemmmoment $M_E$ proportional zu der Federkraft $F_F$ ist, wobei der Proportionalitätsfaktor $K_3$ ein die Geometrie der Verstellmechanik berücksichtigender Gewichtungsparameter ist. Der Gewichtungsparameter berücksichtig hierbei beispielsweise die Hebellänge, die Hebelübersetzung oder die Position der Verstellmechanik. In den Gewichtungsparameter fließen zudem auch Informationen über die Gefahrenbereiche, also beispielsweise die Abstände zwischen den Sitzen ein, die insbesondere auch abhängig von der Körpergröße sind. Die Federkraft $F_F$ ist wiederum proportional zu dem zurückgelegten Drehwinkel $\varphi - \varphi_K$, wobei der Proportionalitätsfaktor die Federkonstante c ist. $\varphi_K$ ist hierbei der Drehwinkel zum Zeitpunkt zu Beginn des Einklemmfalls, wenn also zum ersten Mal ein Kontakt zwischen dem zu verstellenden Sitz und der eingeklemmten Person auftritt.

$$\text{Gleichung 5:} \qquad M_E = K_3 F_F = K_3 {\cdot} c {\cdot} (\varphi - \varphi_K)$$

Aus diesem physikalischen Modell lässt sich ein mathematisches Modell bzw. ein entsprechender Berechnungsalgorithmus ableiten, der sich für den Fall, dass zunächst das den Einklemmfall repräsentierende Federmodell unberücksichtigt bleibt, durch den in Fig. 2 dargestellten Regelkreis darstellen lässt. Dieser Regelkreis bildet im Wesentlichen die Zusammenhänge gemäß den Gleichungen 1 bis 4 ab. Danach bewirkt die Motorspannung u als Stellsignal eine bestimmte Drehzahl n. Eine Veränderung im Motorstrom i führt zu einem veränderten Spannungsabfall über den ohmschen Widerstand R. Gleichermaßen führt eine Veränderung des Lastmoments $M_L$ zu einer Veränderung der Drehzahl und damit zu einer Veränderung der induzierten Gegenspannung. Diese beiden Spannungsanteile wirken auf die Motorspannung u zurück, so dass sich insgesamt ein Regelkreis ausbildet.

Unter Berücksichtigung des ergänzenden Federmodells lässt sich ein zweites mathematisches Modell ableiten, mit dessen Hilfe die aktuelle Situation auf Vorliegen eines Einklemmfalls überprüft wird. Dieses zweite Modell lässt sich mit einem Regelkreis gemäß Fig.3 abbilden. Dieser ist gegenüber dem Regelkreis gemäß Fig. 2 um das Federmodell erweitert, wie dies durch Gleichung 5 repräsentiert ist.

Aus der Drehzahl n ergibt sich über eine Integration der Drehwinkel $\varphi$. Aufgrund der Federkonstanten c wird das Einklemmmoment $M_E$ aufgebaut. Das über das erste mathematische Modell gemäß Fig. 2 zuletzt ermittelte Lastmoment $M_L$ wird als konstante Größe vom ersten Modell als Eingangsgröße $M_L'$ für das zweite Modell gemäß Fig. 3 übernommen. Die Eingangsgröße $M_L'$ entspricht einem die Gesamtreibung des Systems charakterisierendes Grundmoment $M_G$. Sämtliche in dieses zweite Modell eingehende Größen, nämlich die Induktivität L, der Widerstand R, die Konstanten $K_1$ bis $K_3$, sowie das Trägheitsmoment J des Motors sind bekannt bzw. bestimmbar und die Drehzahl und damit der Drehwinkel lassen sich messen. Es verbleibt als einzige Unbekannte die Federkonstante c, die sich also mit Hilfe eines geeigneten Algorithmus auf Grundlage des zweiten mathematischen Modells bestimmen lässt.

Die Größen L, R sowie $K_1$ und $K_2$ sind motorspezifische Kenngrößen, die bei Verwendung eines bestimmten Motortyps bekannt sind oder sich zumindest durch Versuche ermitteln lassen. Das Trägheitsmoment J sowie die Konstante $K_3$ sind die Verstellmechanik bzw. das Zusammenwirken des Motors mit der Verstellmechanik charakterisierende Größen, die sich ebenfalls insbesondere durch Versuche an Referenzmodellen ermitteln lassen und auch ermittelt werden. Die Konstante $K_3$ wird hierbei für jeden Verstellvorrichtungs-Typ gesondert ermittelt. Hierbei werden insbesondere mit Hilfe von Messungen an einem realen Modell der Verstellvorrichtung die Werte zu dem Parameter $K_3$ gemessen und abgespeichert. Zu berücksichtigen ist hierbei, dass insbesondere der die Mechanik der Sitzverstellung repräsentierende Gewichtungsparameter $K_3$ von anderen Größen, wie beispielsweise Neigungswinkel der Rückenlehne oder aktuelle Längsposition des Sitzes abhängig ist. Insgesamt wird daher eine Wertetabelle oder ein Kennfeld für den Parameter $K_3$ aufgestellt und in einem Speicher der Steuereinrichtung hinterlegt. Aus dieser werden dann jeweils in Abhängigkeit der aktuellen Position des Sitzes die jeweils gültigen Parameterwerte entnommen und in die Berechnung für das erste bzw. zweite Modell übernommen. Die Verarbeitung der Werte dieser Parameter kann hierbei auch im Rahmen einer Fuzzy-Logik erfolgen.

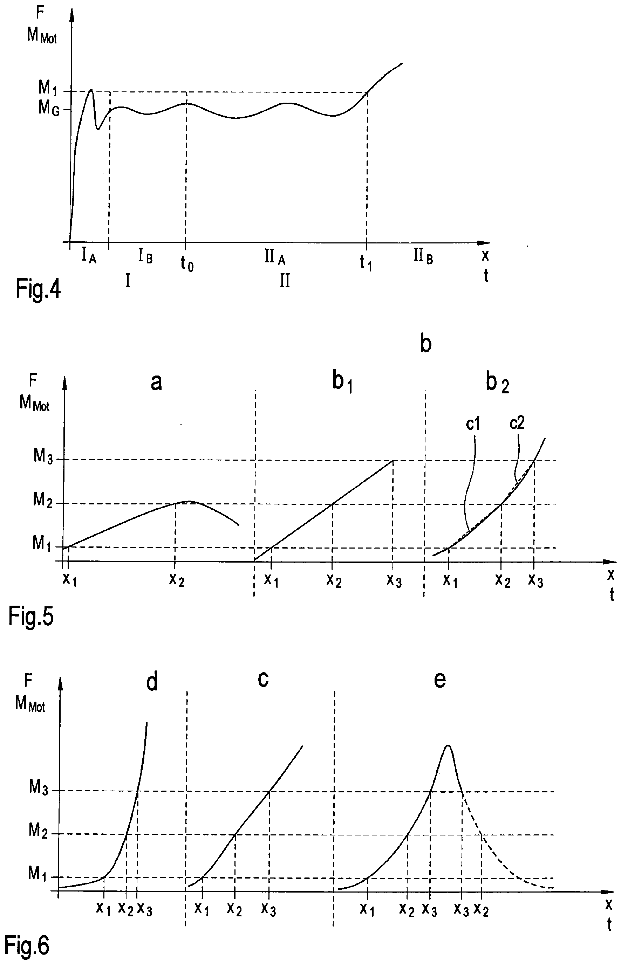

Aus Fig. 4 ist ein typischer Verlauf des Motormoments $M_{Mot}$ gegenüber dem Verstellweg x oder auch gegenüber der Zeit t dargestellt. Anstelle des Motormoments $M_{Mot}$ kann auch die vom Motor ausgeübte Kraft F aufgetragen sein. Es ist nicht zwingend erforderlich, das Motormoment zu bestimmen und auszuwerten. Es ist ausreichend, ein zu der ausgeübten Kraft F korrelierte Größe zu ermitteln oder ergänzend heranzuziehen und auszuwerten. Die korrelierte Größe ist beispielsweise die erfasste Drehzahl n.

Bei dem Verfahren wird unterschieden zwischen einer Startphase I und einer Überwachungsphase II. Die Startphase I ist in zwei Teilphasen $I_A$ und $I_B$ unterteilt, wobei die Teilphase $I_A$ eine Anfahrphase des Motors 2 repräsentiert, während der Motor 2 auf ein bestimmtes, im Wesentlichen konstantes Motormoment $M_{Mot}$ eingeregelt wird. Auf diesem Niveau verharrt das Motormoment $M_{Mot}$, sofern sich keine Reibungsänderungen, Schwergängigkeiten oder Einklemmsituationen ergeben. Die zweite Teilphase $I_B$ dient zur Bestimmung eines Grundmoments $M_G$. Dies entspricht dem während dieser Teilphase $I_B$ vom Motor 2 abgegebenen Motormoment $M_{Mot}$, welches auch als Gesamtmoment oder Gesamtbelastung bezeichnet wird. Die Bestimmung des Grundmoments $M_G$ erfolgt insbesondere durch Mittelwertbildung der Werte für das Motormoment $M_{Mot}$ über die zweite Teilphase $I_B$. Alternativ hierzu wird die Mittelwertbildung über die gesamte Startphase I vorgenommen und die Anfahreffekte vernachlässigt.

Die Startphase I geht zu einem Zeitpunkt $t_0$ in die Überwachungsphase II über. Der Zeitpunkt $t_0$ ist hierbei derart bemessen, dass bis zu diesem Zeitpunkt die Verstellvorrichtung einen vorgegebenen Verstellweg zurückgelegt hat. Der während der Startphase I ermittelte Wert für das Grundmoment $M_G$ wird zunächst für die Überwachungsphase II als Vergleichswert festgehalten. Während der Überwachungsphase II wird eine signifikante oder charakteristische Abweichung als Differenz zum Grundmoment $M_G$ definiert und es wird ein als unterer Belastungswert $M_1$ bezeichneter Grenzwert festgelegt. Der Verlauf des Motormoments $M_{Mot}$ wird jetzt daraufhin überwacht, ob dieser untere Belastungsgrenzwert $M_1$ überschritten wird. Als Kriterium für den Verlauf des Motormoments $M_{Mot}$ wird hierbei insbesondere der gemittelte Verlauf der Drehzahl n herangezogen.

Bevorzugt wird hierbei während des Verstellvorgangs sowohl der Wert für das Grundmoment $M_G$ und mit ihm der untere Belastungswert $M_1$ angepasst. Üblicherweise treten nämlich über den Verstellweg unterschiedliche Reibungswerte und lokale Schwergängigkeiten auf, so dass das Motormoment $M_{Mot}$ variiert und beispielsweise auch über einen längeren Verstellweg hinweg kontinuierlich zunimmt. Würde das Grundmoment $M_G$ nicht angepasst werden, bestünde die Gefahr, dass der Belastungswert $M_1$ überschritten wird, welcher ein Auslösekriterium für die Überprüfung ist, ob ein Einklemmfall vorliegt. Das Anpassen des Grundmoments $M_G$ erfolgt hierbei beispielsweise durch eine gleitende Mittelwertbildung über ein vorgegebenes Zeitfenster oder auch über eine kontinuierte Mittelwertbildung, beginnend ab dem Zeitpunkt $t_0$.

Wird der Belastungswert $M_1$ überschritten, so wird dies als Indiz für einen möglichen Einklemmfall gewertet. Zu diesem Zeitpunkt wird von dem ersten mathematischen Modell auf das zweite mathematische Modell umgeschalten und nunmehr für die Berechnung das Federmodell berücksichtigt. Beim Umschalten auf das zweite Modell wird hierbei zumindest eine mit dem ersten Modell noch ermittelte Größe als Eingangsgröße für das zweite Modell übernommen. Dies ist insbesondere der Wert für das zuletzt aktuelle Grundmoment $M_G$, da dieses die Summe aller auf den Antrieb einwirkenden Momente, außer dem Einklemmmoment $M_E$ darstellt.

Die Umschaltung auf das zweite mathematische Modell erfolgt daher zum Zeitpunkt $t_1$, zu dem der Belastungswert $M_1$ überschritten ist. Damit ist auch die Überwachungsphase II in zwei Teilphasen $II_A$ und $II_B$ unterteilt, wobei während der ersten Teilphase $II_A$ das erste mathematische Modell zur Überwachung herangezogen wird und während der Teilphase $II_B$ das zweite mathematische Modell herangezogen wird.

Mit Hilfe des zweiten mathematischen Modells wird nunmehr überprüft, ob tatsächlich ein Einklemmfall vorliegt. Dies wird nachfolgend anhand der Fig. 5 bis 7 näher erläutert. Wird während dieser Überprüfung festgestellt, dass ein Einklemmfall vorliegt, so wird der Motor 2 automatisch gestoppt und gegebenenfalls reversiert. Wird festgestellt, dass es sich nicht um einen Einklemmfall handelt, wird anschließend wieder auf das erste mathematische Modell umgeschalten und die Teilphase $II_A$ der Überwachungsphase II weitergeführt.

Bei der Überprüfung einer Sitzverstellung auf einen Einklemmfall wird der Verlauf des Motormoments $M_{Mot}$ daraufhin untersucht, welche der nachfolgenden Bewegungsklassen vorliegen:

a) Schwergängigkeit der Verstellvorrichtung,
b) Einklemmen eines Gegenstands, wobei hier zwei Einklemmsituationen b1 ,b2 unterschieden werden,
c) Anfahren gegen einen Endanschlag,
d) schlagartige Gegenreaktion (Panikreaktion) sowie
e) Lastbewegung.

Die charakteristischen Verläufe für diese Bewegungsklassen des Motormoments $M_{Mot}$ sind in den Fig. 5 und 6 dargestellt.

Wie aus den einzelnen Kurvenabschnitten in den Fig. 5 und 6 zu entnehmen ist, zeichnet sich die Bewegungsklasse a) der Schwergängigkeit durch einen langsamen Momentanstieg aus. Üblicherweise werden hier keine hohen Drehmomentwerte erreicht. Im Unterschied hierzu zeichnet sich der Kurvenverlauf bei der Bewegungsklasse des Einklemmfall b) durch einen etwas steileren Anstieg aus. Hierbei können prinzipiell die Einklemmsituationen auftreten, dass ein quasi unbeweglicher Gegenstand eingeklemmt wird. Unter Zugrundelegung des die physikalische Realität sehr gut repräsentierenden Federmodells bedeutet dies einen gleichmäßigen linearen Anstieg der vom Motor 2 ausgeübten Kraft und damit seines Motormoments $M_{Mot}$. Dies entspricht dem Kurvenabschnitt gemäß $b_1$. Üblicherweise ist jedoch damit zu rechnen, dass die Person eine gewisse Gegenkraft ausüben wird. Dies ist mit dem Kurvenverlauf gemäß $b_2$ dargestellt, wonach der Momentanstieg progressiv und nicht linear ist. Die Bewegungsklasse c) zeichnet sich gegenüber der Bewegungsklasse b) durch einen stärkeren Kraftanstieg aus, da hier die Sitzmechanik gegen einen mechanischen Anschlag verfährt. Der Anstieg ist hierbei üblicherweise linear, da der mechanische Anschlag durch mindestens eine konstante Federrate oder Federkonstante c charakterisiert ist und somit die Kraft sich proportional zum zurückgelegten Weg linear aufbaut. Im Unterschied hierzu ist bei einer Lastbewegung (Bewegungsklasse e)), also beispielsweise einer Bewegung der Person auf dem Sitz während der Sitzverstellung, ein dem Betrag nach ähnlicher Kraftanstieg zu erkennen, wobei jedoch der Verlauf des Kraftanstiegs nicht mehr linear wie bei dem Anfahren gegen den mechanischen Anschlag ist. Schließlich ist noch eine weitere Bewegungsklasse d), nämlich die einer Panikreaktion festgelegt. Hierbei wird davon ausgegangen, dass unter bestimmen Situationen die Gefahr eines Einklemmens von der Person durch eine schlagartige Gegenreaktion beantwortet wird. Dies äußert sich in der Regel dadurch, dass diese Person mit ihrer ganzen Kraft sich der Verstellbewegung entgegenstemmt. Hierdurch wird ein sehr steiler Kraftanstieg hervorgerufen. Auch ist hier kein streng linearer Verlauf zu erwarten.

Im zugrundeliegenden Federmodell bei der Bewertung dieser unterschiedlichen Situationen entspricht der Anstieg der Kraft bzw. des Motormoments $M_{Mot}$ der Steigung bzw.

Ableitung und damit der Federkonstanten c. Als maßgebliches Kriterium für die Einstufung des aktuell gemessenen Verlaufs des Motormoments $M_{Mot}$ wird daher die über die Ableitung erhältliche Federkonstante c als Entscheidungskriterium herangezogen. Ergänzend sind für die eindeutige Zuordnung weitere Entscheidungskriterien vorgesehen, die erfüllt sein müssen. Der Begriff "Ableitung" ist hierbei sehr weit zu verstehen. Wesentlich ist, dass Kenngrößen für den Verlauf des jeweiligen Motormoments $M_{Mot}$ ermittelt werden, aus denen sich Rückschlüsse ziehen lassen, welche der Bewegungsklassen a) bis e) vorliegt.

Im Ausführungsbeispiel werden zur Identifizierung der unterschiedlichen Bewegungsklassen neben dem unteren Belastungswert $M_1$ ein mittlerer Belastungswert $M_2$ sowie ein maximaler Belastungswert $M_3$ definiert. Wird der jeweilige Belastungswert $M_1$ bis $M_3$ erreicht, so wird der zugeordnete Verstellweg $x_1$ bis $x_3$ (oder auch der zugeordnete Zeitpunkt t) festgehalten und es werden jeweils Wertepaare $(M_1,x_1)$, $(M_2,x_2)$ sowie $(M_3,x_3)$ gebildet. Alternativ hierzu besteht auch die Möglichkeit, während der Teilphase $II_B$ feste Wegpunkte vorzugeben und zu diesen Wegpunkten das jeweils aktuelle Motormoment $M_{Mot}$ zu bestimmen.

Aus den Wertepaaren wird dann insbesondere durch einfache lineare oder auch eine andere mathematische Interpolation jeweils ein Wert für die Steigung c1, c2 ermittelt. Dies ist in Fig. 5 zu der Bewegungsklasse b2 angedeutet. Durch die Auswertung lediglich von drei diskreten Wertepaaren ist der Rechenaufwand sehr gering. Alternativ hierzu besteht natürlich auch die Möglichkeit, kontinuierlich die Ableitung zu bestimmen.

Einige Bewegungsklassen a) bis e) unterscheiden sich auch oder teilweise lediglich durch den Verlauf des Anstiegs. Durch die Ermittlung von drei Wertepaaren werden zwei Intervalle zur Auswertung herangezogen, so dass erkennbar wird, ob der Kraftanstieg zunimmt, gleich bleibt oder eventuell auch abnimmt.

Ergänzend zu dem Entscheidungskriterium der Ableitung (Steigung c1, c2) wird als weiteres Entscheidungskriterium noch herangezogen, dass der maximale Belastungswert $M_3$ überschritten wird. Auf einen Einklemmfall wird daher lediglich dann erkannt, wenn die Ableitung sich in einem vorbestimmten Wertebereich bewegt und zugleich der maximale Belastungswert $M_3$ überschritten wird. Im Hinblick auf die Ableitung wird als Entscheidungswert neben dem absoluten Wert auch der Verlauf des absoluten Wertes herangezogen.

Wie sich aus dem Vergleich der Fig. 5 und 6 ergibt, ist von entscheidender Bedeutung, dass die Bewegungsklasse der Panikreaktion d) als solche überhaupt in Erwägung gezogen wird. Denn die Bewegungsklassen b) und d) repräsentieren Einklemmsituationen. Allerdings liegen zwischen diesen beiden Einklemmsituationen die Bewegungsklassen c) und e), nämlich Anfahren gegen Endanschlag sowie Lastbewegung. Insbesondere bei der Lastbewegung ist jedoch ein Abschalten des Motors oder Reversieren unerwünscht. Erst durch die Überprüfung des Kurvenverlaufs im Hinblick auf eine solche Panikreaktion wird also eine hohe Entscheidungssicherheit für das Identifizieren eines Einklemmfalls ermöglicht, ohne dass mit Komforteinbußen zu rechnen ist.

Für die Zuordnung des aktuell gemessenen Verlaufs zu den einzelnen Bewegungsklassen a) bis e) ist insbesondere die Ableitung von besonderer Bedeutung. Für die Zuordnung, welcher Wert der Ableitung bzw. welcher Verlauf der Ableitung welcher der Bewegungsklassen a) bis e) zuzuordnen ist, sind zweckdienlicherweise - ähnlich wie bei dem Gewichtungsfaktor $K_3$ - die einzelnen Werte oder Verläufe der Ableitung in einer Tabelle oder in einem Kennfeld hinterlegt, aus dem unmittelbar oder mit Hilfe einer Fuzzy-Logik unter Berücksichtigung weiterer Randparameter dann die Zuordnung zu den einzelnen Bewegungsklassen vorgenommen wird. Die Tabelle bzw. das Kennfeld wird hierbei vorzugsweise ebenfalls nach Art eines Eichvorgangs anhand eines konkreten physikalischen Modells ermittelt oder es wird auf Erfahrungswerte zurückgegriffen.

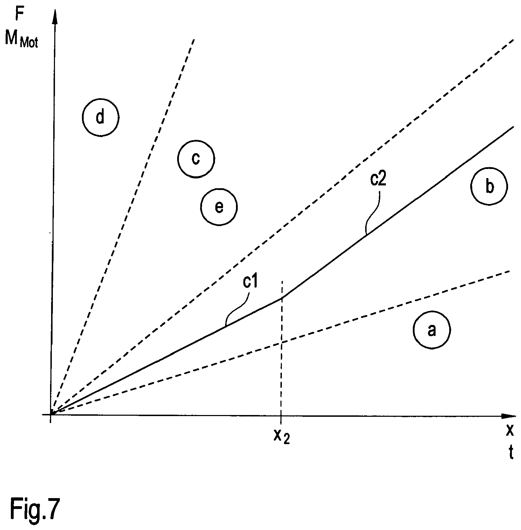

In Fig. 7 ist ein aus einem derartigen Kennfeld abgeleitetes Kraft-Weg-Diagramm dargestellt, in dem die einzelnen, den Bewegungsklassen a)-e) zuzuordnende Bereiche durch gestrichelte Linien voneinander getrennt sind. Weiterhin ist beispielhaft ein Kraftverlauf mit progressivem Kraftanstieg bei einem Einklemmfall eingezeichnet mit den ermittelten Steigungswerten c1, c2.

Bezugszeichenliste

| | | | |
|---|---|---|---|
| 2 | Motor | $K_1, K_2$ | Proportionalitätskonstanten |
| 4 | Welle | | |
| 6 | Feder | $K_3$ | Gewichtungsparameter |
| | | $F_F$ | Federkraft |
| U | Motorspannung | $\varphi$ | Drehwinkel |
| R | Widerstand | $\varphi_K$ | Drehwinkel zum Kontaktzeitpunkt |
| L | Induktivität | | |
| i | Motorstrom | t | Zeit |
| $U_{ind}$ | induzierte Spannung | x | Verstellweg |
| $M_{Mot}$ | Motormoment | $M_1$ | unterer Belastungswert |
| n | Drehzahl | $M_2$ | mittlerer Belastungswert |
| J | Trägheitsmoment | $M_3$ | maximaler Belastungswert |
| $M_L$ | Lastmoment | c1, c2 | Steigung |
| $M_R$ | Reibungsmoment | I | Startphase |
| $M_S$ | Schwergängigkeitsmoment | $I_A$ | Anfangsphase |
| $M_E$ | Einklemmmoment | $I_B$ | zweite Teilphase |
| $M_G$ | Grundmoment | II | Überwachungsphase |
| c | Federkonstante | $II_A, II_B$ | Teilphasen der Überwachungsphase |

## Patentansprüche

1. Einklemmschutz für eine Verstellvorrichtung, insbesondere einer Sitzverstellung eines Kraftfahrzeugs, mit einem motorischen Antrieb (2) und einer Steuereinheit, die derart ausgebildet ist, dass zur Überwachung auf einen Einklemmfall

    a) aus zumindest einer erfassten Kenngröße (u,i,n) des motorischen Antriebs (2) eine vom Antrieb (2) ausgeübte Gesamtbelastung ($M_{Mot}$) abgeleitet wird, und zunächst während einer Startphase (I) jeweils zu Beginn einer Betätigung der Verstellvorrichtung die Gesamtbelastung ($M_{Mot}$) abgeleitet und als Grundbelastung ($M_G$) der Verstellvorrichtung festgehalten wird und während einer Überwachungsphase (II) aus einem Vergleich zwischen der Grundbelastung ($M_G$) und der während der Betätigung der Verstellvorrichtung variierenden Gesamtbelastung ($M_{Mot}$) ermittelt wird, ob ein Einklemmfall vorliegt, wobei zur Ermittlung der Gesamtbelastung ($M_{Mot}$) auf ein erstes mathematisches Modell zurückgegriffen wird oder
    b) eine Kenngröße (u,i,n) des motorischen Antriebs erfasst oder ermittelt und mit Hilfe eines ersten mathematischen Modells ausgewertet wird, **dadurch gekennzeichnet, dass**
erst bei einer signifikanten Abweichung der Gesamtbelastung ($M_{Mot}$) von der Grundbelastung ($M_E$) oder bei einer signifikanten Abweichung der erfassten Kenngröße (u,i,n), für die Beurteilung, ob ein Einklemmfall vorliegt, auf ein zweites, den Einklemmfall berücksichtigendes mathematisches Modell umgeschalten wird.

2. Einklemmschutz nach Anspruch 1, bei dem die Startphase (I) einem translatorischen Verstellweg von bis zu 50 mm beziehungsweise einer Neigungsverstellung von etwa 1 ° der Verstellvorrichtung entspricht.

3. Einklemmschutz nach Anspruch 1 oder 2, **dadurch gekennzeichnet, dass** lediglich das zweite Modell ein den Einklemmfall berücksichtigendes Federmodell umfasst.

4. Einklemmschutz nach einem der vorhergehenden Ansprüche, **dadurch gekennzeichnet, dass** beim Umschalten auf das zweite Modell die zuvor mit dem ersten Modell ermittelten Größen ($M_G$) zumindest zum Teil als Eingangsgrößen für das zweite Modell herangezogen werden.

5. Einklemmschutz nach einem der vorhergehenden Ansprüche , **dadurch gekennzeichnet, dass** als signifikante Abweichung die Überschreitung eines Grenzwerts für die Differenz zwischen Gesamtbelastung ($M_{Mot}$) und Grundbelastung ($M_G$) und/oder die Überschreitung eines Grenzwerts für eine Ableitung der Differenz herangezogen wird.

6. Einklemmschutz nach einem der vorhergehenden Ansprüche, **dadurch gekennzeichnet, dass** zur Ermittlung der Grundbelastung ($M_G$) der Mittelwert der Gesamtbelastung ($M_{Mot}$) herangezogen wird.

7. Einklemmschutz nach einem der vorhergehenden Ansprüche, **dadurch gekennzeichnet, dass** zur Ermittlung der Grundbelastung ($M_G$) während der Startphase (I) die Gesamtbelastung ($M_{Mot}$) während einer Anfahrphase ($I_A$) unberücksichtigt bleibt.

8. Einklemmschutz nach einem der vorhergehenden Ansprüche, **dadurch gekennzeichnet, dass** die Grundbelastung ($M_G$) auch während der Überwachungsphase (II) ermittelt und als aktuelle Grundbelastung ($M_G$) festgehalten wird, die für nachfolgende Messungen der Kenngröße (u,i,n) während der Überwachungsphase (II) für den Vergleich mit der Gesamtbelastung ($M_{Mot}$) herangezogen wird.

9. Einklemmschutz nach Anspruch 8, **dadurch gekennzeichnet, dass** die aktuelle Grundbelastung ($M_G$) aus mehreren Messwerten der Kenngröße (u,i,n) insbesondere durch eine Mittelwertbildung ermittelt wird.

10. Einklemmschutz nach einem der vorhergehenden Ansprüche , **dadurch gekennzeichnet, dass** bei Auftreten der signifikanten Abweichung die Grundbelastung ($M_G$) festgehalten wird und der weitere Verlauf der Gesamtbelastung ($M_{Mot}$), insbesondere die Differenz zwischen der aktuellen Gesamtbelastung ($M_{Mot}$) und der zuvor festgehaltenen Grundbelastung ($M_G$), auf Vorliegen eines Einklemmfalls überprüft wird.

11. Einklemmschutz nach Anspruch 8 oder 9 und 10, **dadurch gekennzeichnet, dass** für den Fall, dass die signifikante Abweichung auf eine unkritische Betriebssituation wie eine Schwergängigkeit oder eine Lastschwankung zurückzuführen ist, die Bestimmung der aktuellen Grundbelastung ($M_E$) wieder aufgenommen wird.

12. Einklemmschutz nach einem der vorhergehenden Ansprüche, **dadurch gekennzeichnet, dass** anhand der Eingangsgrößen (u,i,n) des motorischen Antriebs (2) dessen Gesamtdrehmoment ($M_{Mot}$) und in der Startphase (I) ein Grunddrehmoment ($M_G$) ermittelt und hieraus ein resultierendes Moment, insbesondere Einklemmmoment ($M_E$) abgeleitet wird.

13. Einklemmschutz nach Anspruch 12, **dadurch gekennzeichnet, dass** das Moment ($M_E$) mit einem die Mechanik der Verstellvorrichtung berücksichtigenden Gewichtungsparameter ($K_3$) zur Bestimmung der resultierenden Einklemmkraft gewichtet wird.

14. Einklemmschutz nach Anspruch 13, **dadurch gekennzeichnet, dass** zur Bestimmung des Gewichtungsparameters ($K_3$) eine Messung an einem physikalischen Modell durchgeführt wird und die Messergebnisse in einer Tabelle hinterlegt werden, aus der die Zuordnung des resultierenden Einklemmmoments ($M_E$) zu der resultierenden Einklemmkraft zu entnehmen ist.

15. Einklemmschutz nach einem der vorhergehenden Ansprüche, **dadurch gekennzeichnet, dass** für die Beurteilung, ob ein Einklemmfall vorliegt, ein Federmodell für einen Einklemmfall zu Grunde gelegt wird.

16. Einklemmschutz nach Anspruch 15, **dadurch gekennzeichnet, dass** zumindest eine Federkonstante (c) ermittelt wird, anhand der entschieden wird, ob ein Einklemmfall vorliegt.

17. Einklemmschutz nach Anspruch 16, **dadurch gekennzeichnet, dass** für die Entscheidung, ob ein Einklemmfall vorliegt, die absolute Größe der Federkonstanten (c) und/oder deren Verlauf herangezogen wird.

18. Einklemmschutz nach einem der vorhergehenden Ansprüche, bei dem zumindest drei Belastungsschwellwerte ($M_1$-$M_3$) definiert sind und zwischen jeweils zwei Belastungsschwellwerten ein Wert des Entscheidungskriteriums (c1 ,c2) ermittelt und ausgewertet wird.

19. Einklemmschutz nach einem der vorhergehenden Ansprüche, **dadurch gekennzeichnet, dass** der motorische Antrieb (2) ein drehzahlgeregelter Gleichstrommotor ist.

20. Verfahren zur Steuerung einer motorisch angetriebenen Verstellvorrichtung, insbesondere einer Sitzverstellung eines Kraftfahrzeuges, bei dem zur Überwachung auf einen Einklemmfall

a) aus zumindest einer erfassten Kenngröße (u,i,n) des motorischen Antriebs (2) eine vom Antrieb (2) ausgeübte Gesamtbelastung ($M_{Mot}$) abgeleitet wird, und zunächst während einer Startphase (I) jeweils zu Beginn einer Betätigung der Verstellvorrichtung die Gesamtbelastung ($M_{Mot}$) abgeleitet und als Grundbelastung ($M_G$) der Verstellvorrichtung festgehalten wird und während einer Überwachungsphase (II) aus einem Vergleich zwischen der Grundbelastung ($M_G$) und der während der Betätigung der Verstellvorrichtung variierenden Gesamtbelastung ($M_{Mot}$) ermittelt wird, ob ein Einklemmfall vorliegt, wobei zur Ermittlung der Gesamtbelastung ($M_{Mot}$) auf ein erstes mathematisches Modell zurückgegriffen wird oder
b) eine Kenngröße (u,i,n) des motorischen Antriebs erfasst oder ermittelt und mit Hilfe eines ersten mathematischen Modells ausgewertet wird, **dadurch gekennzeichnet, dass**
erst bei einer signifikanten Abweichung der Gesamtbelastung ($M_{Mot}$) von der Grundbelastung ($M_E$) oder bei einer signifikanten Abweichung der erfassten Kenngröße (u,i,n), für die Beurteilung, ob ein Einklemmfall vorliegt, auf ein zweites, den Einklemmfall berücksichtigendes mathematisches Modell umgeschalten wird.

**Claims**

1. Anti-trapping protection for an adjustment device, in particular for a seat adjustment of a motor vehicle, having a motorised engine (2) and a control unit that is formed in such a way that, for monitoring in the event of trapping,

a) a total load ($M_{Mot}$) exerted by the engine (2) is deduced from at least one detected characteristic value (u,i,n) of the motor drive (2), and initially, during a start phase (I), the total load ($M_{Mot}$) is deduced in each case at the beginning of an activation of the adjustment device and recorded as the base load ($M_G$) of the adjustment device and, during a monitoring phase (II), a comparison between the base load ($M_G$) and the total load ($M_{Mot}$) that varies during the activation of the adjustment device determines whether there is a case of trapping, wherein a first mathematical model is drawn on for determining the total load ($M_{Mot}$) or
b) a characteristic value (u,i,n) of the motorised engine is detected or determined and evaluated by means of a first mathematical model, **characterised in that**, only when the total load ($M_{Mot}$) significantly deviates from the base load ($M_E$) or when a there is a significant deviation of the detected characteristic value (u,i,n), is there a switch to a second mathematical model that considers the case of trapping to judge whether there is a case of trapping.

2. Anti-trapping protection according to claim 1, in which the start phase (I) corresponds to a translational adjustment track of up to 50 mm or an inclination adjustment of approximately 1° of the adjustment device.

3. Anti-trapping protection according to claim 1 or 2, **characterised in that** only the second model comprises a spring model that considers the case of trapping.

4. Anti-trapping protection according to one of the preceding claims, **characterised in that**, when switching to the second model, the values ($M_G$) previously determined by the first model are, at least in part, used as input values for the second model.

5. Anti-trapping protection according to one of the preceding claims, **characterised in that** exceeding a limit value for the difference between total load ($M_{Mot}$) and base load ($M_G$) and/or exceeding a limit value for deducing the difference is used as significant deviation.

6. Anti-trapping protection according to one of the preceding claims, **characterised in that** the mean of the total load ($M_{Mot}$) is used to determine the base load ($M_G$).

7. Anti-trapping protection according to one of the preceding claims, **characterised in that** the total load ($M_{Mot}$) during the moving off phase ($I_A$) is not taken into consideration when determining the base load ($M_G$) during the start phase (I).

8. Anti-trapping protection according to one of the preceding claims, **characterised in that** the base load ($M_G$) is also determined during the monitoring phase (II) and is recorded as the current base load ($M_G$) which is used for subsequent measurements of the characteristic value (u,i,n) during the monitoring phase (II) for comparison with the total load ($M_{Mot}$).

9. Anti-trapping protection according to claim 8, **characterised in that** the current base load ($M_G$) is determined from several measurements of the characteristic value (u,i,n), in particular by averaging.

10. Anti-trapping protection according to one of the preceding claims, **characterised in that**, when significant deviance arises, the base load ($M_G$) is recorded and the further course of the total load ($M_{Mot}$), in particular the difference between the current total load ($M_{Mot}$) and the previously recorded base load ($M_G$), is assessed for the presence of trapping.

11. Anti-trapping protection according to claim 8 or 9 and 10, **characterised in that**, if the significant deviation is to be restored to an uncritical operation situation such as a sluggishness or a load fluctuation, determining the current base load ($M_E$) is resumed.

12. Anti-trapping protection according to one of the preceding claims, **characterised in that**, by means of the input values (u,i,n) of the motorised engine (2), the total torsional moment ($M_{Mot}$) thereof and a base torsional moment ($M_G$) in the start phase (I) are determined and a resulting moment is deduced from this, in particular a trapping moment ($M_E$).

13. Anti-trapping protection according to claim 12, **characterised in that** the moment ($M_E$) is weighted by a weighting parameter ($K_3$) that considers the mechanical system of the shifting device to determine the resulting trapping power.

14. Anti-trapping protection according to claim 13, **characterised in that**, to determine the weighting parameter ($K_3$), a measurement is carried out on a physical model and the measured results are recorded in a table, which shows the allocation of the resulting trapping moment ($M_E$) to the resulting trapping power.

15. Anti-trapping protection according to one of the preceding claims, **characterised in that** a spring model is used as a basis for a case of trapping to judge whether there is a case of trapping.

16. Anti-trapping protection according to claim 15, **characterised in that** at least one spring constant (c) is determined, by means of which it is decided whether there is a case of trapping.

17. Anti-trapping protection according to claim 16, **characterised in that** the absolute value of the spring constants (c) and/or the course thereof is used to decide whether there is a case of trapping.

18. Anti-trapping protection according to one of the preceding claims, in which at least three load threshold values ($M_1$-$M_3$) are defined and one value of the decision criterion (c1, c2) is determined and evaluated between two load threshold values in each case.

19. Anti-trapping protection according to one of the preceding claims, **characterised in that** the motorised engine (2) is an RPM-regulated direct current motor.

20. Method for controlling a motor-driven shifting device, in particular for a seat adjustment of a motor vehicle, in which for monitoring in the event of trapping,

a) a total load ($M_{Mot}$) exerted by the engine (2) is deduced from at least one detected characteristic value (u,i,n) of the motorised engine (2), and initially, during a start phase (I), the total load ($M_{Mot}$) is deduced in each case at the beginning of an activation of the adjustment device and recorded as the base load ($M_G$) of the adjustment device and, during a monitoring phase (II), a comparison between the base load ($M_G$) and the total load ($M_{Mot}$) that varies during the activation of the adjustment device determines whether there is a case of trapping, wherein a first mathematical model is drawn on for determining the total load ($M_{Mot}$) or

b) a characteristic value (u,i,n) of the motorised engine is detected or determined and evaluated by means of a first mathematical model, **characterised in that**, only when the total load ($M_{Mot}$) significantly deviates from the base load ($M_E$) or when a there is a significant deviation of the detected characteristic value (u,i,n), is there a switch to a second mathematical model that considers the case of trapping to judge whether there is a case of trapping.

**Revendications**

1. Système anti-pincement pour un dispositif de réglage, notamment un réglage de siège d'un véhicule automobile, comprenant un entrainement motorisé (2) et une unité de commande, qui est configurée de manière telle que pour la surveillance quant à un cas de pincement,

   a) on dérive à partir d'au moins une grandeur caractéristique relevée (u, i, n) de l'entraînement motorisé (2), une charge totale ($M_{Mot}$) exercée par l'entrainement (2), et, dans un premier temps, pendant une phase de démarrage (I) respectivement au début d'un actionnement du dispositif de réglage, on dérive la charge totale ($M_{Mot}$) et on la fixe comme charge de base ($M_G$), et pendant une phase de surveillance (II), on détermine, à partir d'une comparaison entre la charge de base ($M_G$) et la charge totale ($M_{Mot}$) variant pendant l'actionnement du dispositif de réglage, si l'on est en présence d'un cas de pincement, la détermination de la charge totale ($M_{Mot}$) se faisant en se référant à un premier modèle mathématique, ou bien
   b) on relève ou détermine une grandeur caractéristique (u, i, n) de l'entrainement motorisé, que l'on traite à l'aide d'un premier modèle mathématique,

   **caractérisé**
   **en ce que** seulement dans le cas d'un écart significatif de la charge totale ($M_{Mot}$) vis-à-vis de la charge de base ($M_E$), ou dans le cas d'un écart significatif de la grandeur caractéristique (u, i, n), on effectue, pour l'évaluation de la présence d'un cas de pincement, une commutation vers un deuxième modèle mathématique prenant en considération le cas de pincement.

2. Système anti-pincement selon la revendication 1, dans lequel la phase de démarrage (I) correspond à un déplacement de réglage de translation pouvant aller jusqu'à 50 mm, ou respectivement un réglage d'inclinaison d'environ 1° du dispositif de réglage.

3. Système anti-pincement selon la revendication 1 ou la revendication 2, **caractérisé en ce que** seul le deuxième modèle englobe un modèle de ressort prenant en considération le cas de pincement.

4. Système anti-pincement selon l'une des revendications précédentes, **caractérisé en ce que** lors de la commutation vers le deuxième modèle, les grandeurs ($M_G$) déterminées auparavant avec le premier modèle, sont mises à profit, au moins en partie, en tant que grandeurs d'entrée pour le deuxième modèle.

5. Système anti-pincement selon l'une des revendications précédentes, **caractérisé en ce que** concernant un écart significatif, on utilise le dépassement d'une valeur de seuil pour la différence entre la charge totale ($M_{Mot}$) et la charge de base ($M_G$), et/ou le dépassement d'une valeur de seuil pour une valeur dérivée de la différence.

6. Système anti-pincement selon l'une des revendications précédentes, **caractérisé en ce que** pour déterminer la charge de base ($M_G$), on utilise la valeur moyenne de la charge totale ($M_{Mot}$).

7. Système anti-pincement selon l'une des revendications précédentes, **caractérisé en ce que** pour la détermination de la charge de base ($M_G$) pendant la phase de démarrage (I), la charge totale ($M_{Mot}$) n'est pas prise en considération pendant une phase de mise en mouvement ($I_A$).

8. Système anti-pincement selon l'une des revendications précédentes, **caractérisé en ce que** la charge de base

($M_G$) est également déterminée pendant la phase de surveillance (II) et fixée comme charge de base ($M_G$) actuelle, qui est prise en considération pour des mesures suivantes de la grandeur caractéristique (u, i, n) pendant la phase de surveillance (II) pour la comparaison avec la charge totale ($M_{Mot}$).

9. Système anti-pincement selon la revendication 8, **caractérisé en ce que** la charge de base ($M_G$) actuelle est déterminée à partir de plusieurs valeurs de mesure de la grandeur caractéristique (u, i, n), notamment par une formation de moyenne.

10. Système anti-pincement selon l'une des revendications précédentes, **caractérisé en ce que** lors de l'apparition de l'écart caractéristique, on fixe la charge de base ($M_G$), et l'on évalue la suite de la loi de variation de la charge totale ($M_{Mot}$), notamment la différence entre la charge totale ($M_{Mot}$) actuelle et la charge de base ($M_G$) précédemment fixée, quant à la présence d'un cas de pincement.

11. Système anti-pincement selon la revendication 8 ou la revendication 9 et 10, **caractérisé en ce que** pour le cas où l'écart significatif est à mettre sur le compte d'une situation de fonctionnement non critique comme une dureté de déplacement ou une variation de charge, la détermination de la charge de base ($M_E$) actuelle est à nouveau reprise.

12. Système anti-pincement selon l'une des revendications précédentes, **caractérisé en ce qu'**à l'aide des grandeurs d'entrée (u, i, n) de l'entrainement motorisé (2), on détermine son couple total ($M_{Mot}$) et, dans la phase de démarrage (I), un couple de base ($M_G$) et un moment en résultant, notamment un moment de pincement ($M_E$).

13. Système anti-pincement selon la revendication 12, **caractérisé en ce que** le moment ($M_E$) est pondéré par un paramètre de pondération ($K_3$) prenant en considération la mécanique du dispositif de réglage, pour la détermination de la force de pincement résultante.

14. Système anti-pincement selon la revendication 13, **caractérisé en ce que** pour déterminer le paramètre de pondération ($K_3$), on effectue une mesure sur un modèle physique, et les résultats de mesure sont stockés dans un tableau duquel peut être prélevée l'association du moment de pincement ($M_E$) -résultant à la force de pincement résultante.

15. Système anti-pincement selon l'une des revendications précédentes, **caractérisé en ce que** pour évaluer la présence d'un cas de pincement, on se fonde sur un modèle de ressort pour un cas de pincement.

16. Système anti-pincement selon la revendication 15, **caractérisé en ce que** l'on détermine au moins une constante de ressort (c) au regard de laquelle est décidée la présence d'un cas de pincement.

17. Système anti-pincement selon la revendication 16, **caractérisé en ce que** pour la décision de la présence d'un cas de pincement, on met à profit la grandeur absolue des constantes de ressort (c) et/ou leur loi de variation.

18. Système anti-pincement selon l'une des revendications précédentes, pour lequel sont définies au moins trois valeurs de seuil de charge ($M_1$-$M_3$), et entre respectivement deux valeurs de seuil de charge on détermine et traite une valeur du critère de décision (c1, c2).

19. Système anti-pincement selon l'une des revendications précédentes, **caractérisé en ce que** l'entrainement motorisé (2) est un moteur à courant continu régulé en vitesse de rotation.

20. Procédé de commande d'un dispositif de réglage entrainé par moteur, notamment un réglage de siège d'un véhicule automobile, d'après lequel pour assurer la surveillance quant à un cas de pincement

a) on dérive à partir d'au moins une grandeur caractéristique relevée (u, i, n) de l'entrainement motorisé (2), une charge totale ($M_{Mot}$) exercée par l'entrainement (2), et, dans un premier temps, pendant une phase de démarrage (I) respectivement au début d'un actionnement du dispositif de réglage, on dérive la charge totale ($M_{Mot}$) et on la fixe comme charge de base ($M_G$), et pendant une phase de surveillance (II), on détermine, à partir d'une comparaison entre la charge de base ($M_G$) et la charge totale ($M_{Mot}$) variant pendant l'actionnement du dispositif de réglage, si l'on est en présence d'un cas de pincement, la détermination de la charge totale ($M_{Mot}$) se faisant en se référant à un premier modèle mathématique, ou bien

b) on relève ou détermine une grandeur caractéristique (u, i, n) de l'entrainement motorisé, que l'on traite à l'aide d'un premier modèle mathématique,

**caractérisé**

**en ce que** seulement dans le cas d'un écart significatif de la charge totale ($M_{Mot}$) vis-à-vis de la charge de base ($M_E$), ou dans le cas d'un écart significatif de la grandeur caractéristique (u, i, n), on effectue, pour l'évaluation de la présence d'un cas de pincement, une commutation vers un deuxième modèle mathématique prenant en considération le cas de pincement.

Fig.1

Fig.2

Fig.3

Fig.4

Fig.5

Fig.6

Fig.7

**EP 1 987 574 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1310030 B1
- EP 1299782 B1
- EP 0714052 B1
- EP 0865137 A
- DE 199041475 A1